# EUROPEAN PATENT SPECIFICATION

(11) **EP 1 347 715 B1**
(45) Date of publication and mention of the grant of the patent: **05.11.2008**
(21) Application number: 01272995.0
(22) Date of filing: 27.12.2001
(51) Int. Cl.: A61C 13/275, A61M 5/19, A61M 5/32, B05C 17/005, B65D 81/32

(54) **METHOD AND DEVICE FOR A DENTAL UNIT**
VERFAHREN UND VORRICHTUNG FÜR EINE DENTALEINHEIT
PROCEDE ET DISPOSITIF D'UNE UNITE DENTAIRE

(30) Priority: 29.12.2000 SE 0004883
(43) Date of publication of application: 01.10.2003
(73) Proprietor: Nobel Biocare AB (publ), 402 26 Göteborg (SE)
(72) Inventor: BRAJNOVIC, Izidor, S-433 30 Partille (SE)
(74) Representative: Byström, Kurt Linus
(86) International application number: PCT/SE2001/002897
(87) International publication number: WO 2002/053058

(56) References cited:
- US-A- 4 260 077
- US-A- 4 906 420
- US-A- 4 981 241
- US-A- 5 277 312

## Description

The present invention relates, inter alia, to a method for reinforcing a unit for dental purposes, e.g. a replacement part in the form of a dental bridge, an assembly template for securing the dental bridge, etc., by applying viscous matrix material via an opening in the unit. The invention also relates to a device in connection with said method.

Reference is made, inter alia, to Swedish Patent 457,691 which relates to a prosthetic structure of composite material with a considerable fiber content, where the matrix material, for example acrylic plastic, is injected into the fiber arrangement which is then allowed to polymerize in a mold to give the finished prosthesis blank.

The matrix material in question is hazardous to health and exposes the personnel involved to health risks. There is therefore a need to be able to design and supply the system in such a way that said risks can be largely eliminated. The main object of the present invention is to solve this problem, among others.

There is also a need to be able to design the system with relatively technically simple means and procedures, for example so that the injection can be precise. It is also important that distribution and sale can be such that the containment of the hazardous means remains effective. The invention solves this problem too.

US4,981,241 discloses a dual dispenser cartridge having two storage cylinders and orifices for attachment to a common mixer tube.

US4,906,420 discloses dispenser for a matrix material.

The invention is defined by claims 1 and 9.

According to the components included in the matrix material and initially viscous are kept separately in two enclosed spaces, that the enclosed spaces are brought into internal contact with each other via a connecting member, and that, upon or after said internal contact, a mixing member situated inside at least the first enclosed space is acted upon so as to mix the viscous matrix components together. Further characteristics are that the mixed-together and still viscous matrix components are fed from the enclosed space or spaces to the inside of the unit via the opening, without any substantial leakage to the outside of the unit taking place.

Further developments of the inventive concept are set out in the attached dependent claims relating to the method and include, inter alia, that the first and second enclosed spaces are arranged in two injection syringes where, for example, an epoxy base is applied in a first enclosed space formed by the barrel space of the first injection syringe, and a hardening agent is applied in the second enclosed space formed by the barrel space of the second injection syringe.

A device comprises two initially separate enclosed spaces for two initially viscous matrix material components, and a connecting member is arranged to internally connect said spaces. At least one of the enclosed spaces has included in it a mixing member which, as a function of the action or actions exerted on it, brings about mixing of the matrix material components upon or after coupling-together of the enclosed spaces, and the device is moreover designed to permit said application to the unit without any substantial leakage to the outside of the unit.

Further developments of the device are set out in the attached dependent claims and include, inter alia, that the first enclosed space is to be arranged in a first injection syringe and the second enclosed space is to be arranged in a second injection syringe. In the initial state, i.e. in the uncoupled position, the first injection syringe comprises a first quantity of matrix material which for example can have the form of an epoxy base. The second enclosed space in the second injection syringe can contain a hardening agent.

A device for supplying agents comprises two space-enclosing units, e.g. two injection syringes separately contain, in their enclosed spaces, matrix material components in an initial state. Said enclosed spaces can be internally connected by means of a connecting member, and at least one enclosed space is provided with a mixing member which upon internal connection of the enclosed spaces, can be actuated so as to mix the matrix material components. Further, at least the space-enclosing units or injection syringes are packed with the matrix material components separately from each other in sealed packages.

Further developments of the inventive concept are set out in the attached dependent claims.

The features which have been proposed above afford advantages in that distribution and sale can be carried out efficiently and safely. The actual injection procedure in the unit can be carried out in a well-sealed system from which substances hazardous to health are largely prevented from leaking. The injection as such is effective and it is guaranteed, for example, that the reinforcement inside the shell will be wetted completely by the mixed-together matrix material. Thus, a unit in the form of a latex tube with carbon fiber can be used. Conventional injection syringes, e.g. for 5 ml and 3 ml Araldite LY 5138, can be used. In addition, it is possible to use injection syringes for 3 ml with 0.8 ml hardening agent HY 5138. A syringe-coupling nozzle in accordance with what is described below can be used. The package in question also includes protective gloves, mouth protector and instructions concerning the mixing procedure.

A presently proposed method and a presently proposed device having the characteristic features of the invention will be described below with reference to the attached drawings, in which:
Figure 1 is a cutaway and diagrammatic side view showing how a coupling member couples together two enclosed spaces included in injection syringes which contain matrix material components,
Figure 1a is a cutaway and diagrammatic side view showing the injection of mixed-together matrix material components into a dental unit or unit intended for the human body,
Figure 1b is a side view showing a design embodiment of the syringe-coupling nozzle which is used in the embodiment according to Figure 1,
Figure 1c is a side view showing a design embodiment of the structure according to Figures 1 and 1b,
Figure 1d is a side view showing a design embodiment of the connection of the first syringe to the unit,
Figure 1e is a side view and cutaway view showing the connection of the first syringe to the unit according to Figure 1d,
Figure 2 is a side view showing a first injection syringe which contains a first matrix material component, e.g. an epoxy base,
Figure 3 is a side view showing a second injection syringe with a second matrix material, e.g. in the form of a hardening agent,
Figure 4 is a side view showing the packaging of the injection syringes shown in Figures 2 and 3, together with protective gloves, mouth protector and instructions,
Figure 5 is a horizontal view showing a carbon fiber-reinforced unit with associated nozzle for injection in the unit, and the coupling nozzle for the injection syringes according to Figures 2, 3 and 4, and
Figures 6 to 6e are various views showing a design embodiment of a mixing member which can be applied in the injection syringe according to Figure 2.

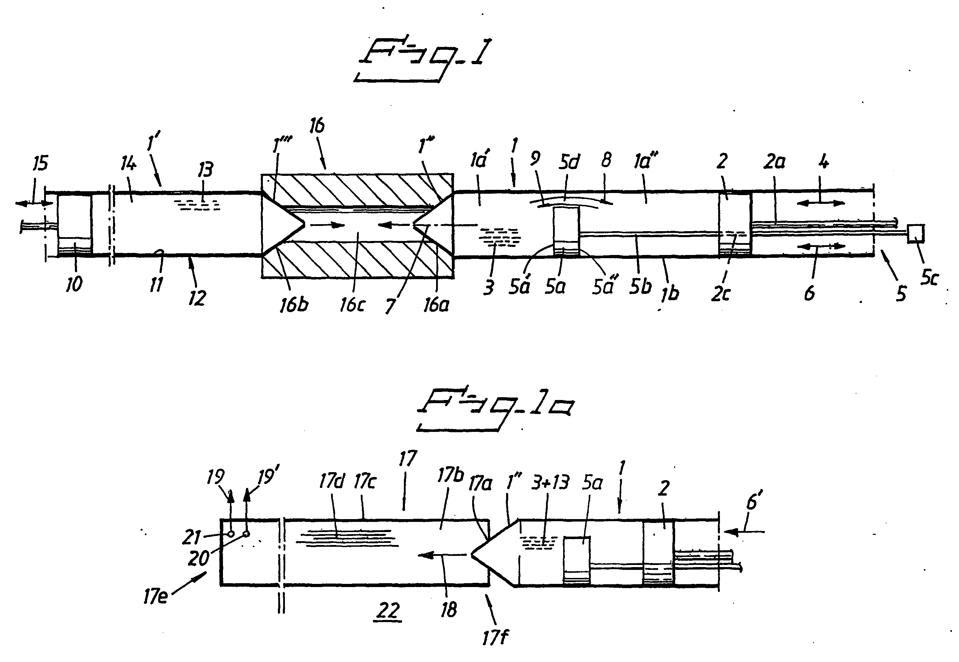

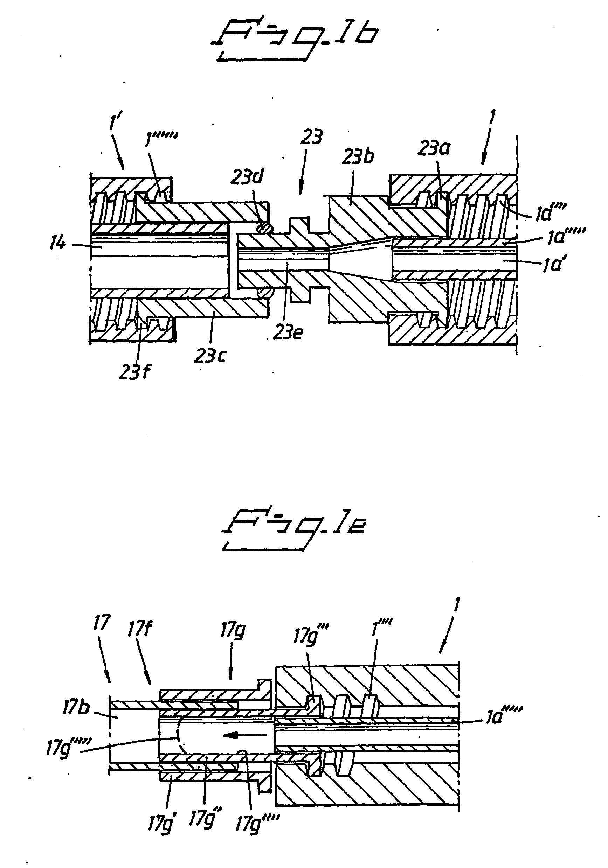

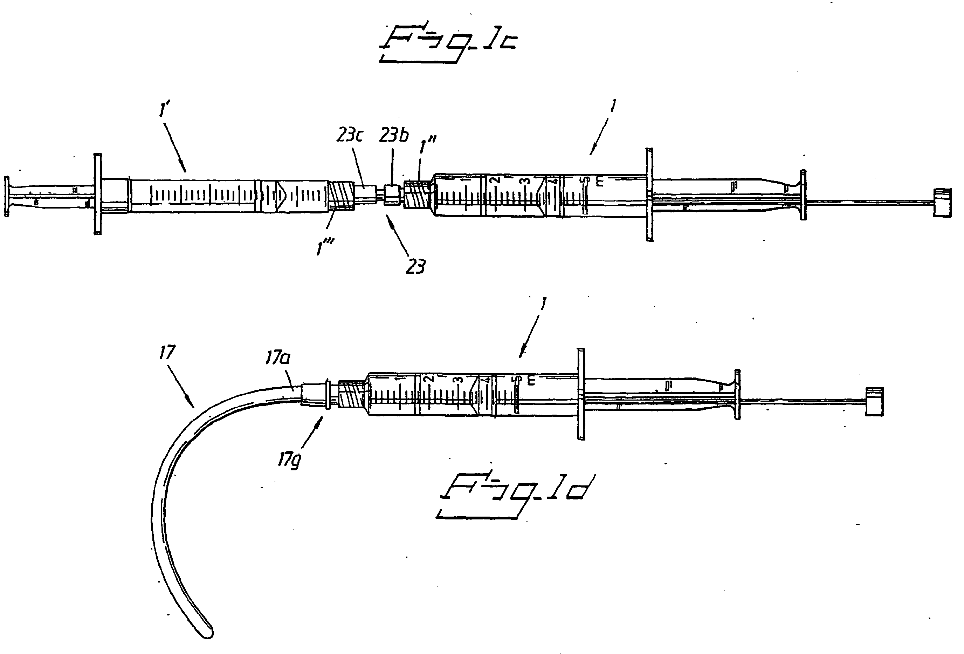

In Figures 1, a first injection syringe is indicated diagrammatically by 1, and a second injection syringe is indicated diagrammatically by 1'. The injection syringes can in principle have conventional structures, but with the exception that the injection syringe 1 has been provided with a special mixing member. The injection syringe 1 has an enclosed space which is made up of two subsidiary spaces 1a' and 1a''. The plunger of the injection syringe is indicated by 2, which plunger can be made of rubber or other elastic material. A first matrix material component symbolized by 3 is contained in the spaces 1a' and 1a''. In this illustrative embodiment, the matrix material component 3 can consist of Araldite LY 5138. The total enclosed space in the cylinder-shaped part 1b of the syringe 1 can be varied in a manner known per se with the aid of the plunger 2 which can be acted upon in the directions of the arrows 4 by acting on the plunger rod 2a in a manner known per se. Said mixing member comprises a first part 5a and, connected to this, a second part 5b. The mixing member as such has the reference label 5. At one end, the part 5b is provided with a part 5c which is shaped as a handle or actuating part. The part 5b extends through a recess 2c in the plunger 2. The mixing member, i.e. the parts 5a and 5b, is displaceable in the longitudinal direction of the injection syringe, i.e. along the center axis 7 of the injection syringe. The directions of displacement are indicated by the arrows 6 in Figure 1. Upon the relative displacement of the mixing member 5a, 5b, 5c, the part 5a moves relative to the barrel wall 1b and the plunger 2. The first part 5a is also provided with a continuous recess 5d via which the matrix material component 3 can pass in the directions of the arrows 8 and 9 as a function of the actuation directions 6. Upon the relative displacement of the first part, the matrix material component is displaced between the upper and lower sides '5a' and 5a'', respectively, of the first part. The displacement of the matrix material component 3 takes place in the directions of the arrows 8 and 9 as a function of the actuation directions 6.

The second injection syringe 1' is also provided with a plunger 10, for example made of rubber material or other elastic material which seals against the inner wall 11 of the cylindrical part 12 of the injection syringe. In the present case, a second matrix material component 13, for example in the form of a hardening agent HY 5138, is introduced into the inner space of the syringe, indicated by 14 in Figure 1. The directions of movement of the plunger 12 are shown by the arrows 15.

A syringe-coupling nozzle is indicated by 16. The nozzle has two bearing seats 16a and 16b for the injection syringes 1 and 1'. The nozzle 16 is in this case designed in such a way that, upon application of the injection syringes to the nozzle (or vice versa), an open inner channel 16c is present. Upon insertion of the front parts 1'' and 1''' in the nozzle 16, the connections between the inner spaces 1a', 1a'' and 14, respectively, in the syringes are opened to the open channel 16c, which thus means that the inner spaces in the syringes come into connection with each other, which also applies to the matrix material components 3 and 13, respectively, contained in the syringes. By acting on or pressing the plunger 2 to the right in the figure and by acting on or pressing the plunger 10 to the right in the figure, the matrix material component 13 can be made to leave the syringe 1' and is transferred to the spaces 1a', 1a'' in the syringe 1. After the transfer of the matrix material component 13 in the spaces 1a', 1a'', the mixing member 5, 5a, 5b, 5c can be acted upon for the abovementioned relative movement, which means that a mixing function (cf. the arrows 8 and 9) of the matrix material components 3 and 13 occurs in the space 1a', 1a''. The matrix material components thus mixed together can be returned in part to the enclosed space 14 by means of acting on or pressing the plungers 2 and 10 to the left in the figure. By means of such a procedure, any residues of hardening agent, i.e. the matrix material component 13, can be taken up by the mixed-together matrix material components. In one embodiment, a complete mixing-together of the matrix material components 3 and 13 can be considered to be obtained, for example, after ten full strokes for the part 5a in the spaces 1a', 1a''.

When the matrix material components 3 and 13 have finally been mixed together and are situated in the spaces 1a' and 1a'', the injection syringe 1 can be removed from the syringe-coupling nozzle 16 (or vice versa) and transferred to the unit 17 which is provided with an opening 17a which leads to the inside 17b of the unit, which is located inside a shell 17c. The direction of application for the syringe 1 relative to the unit 17 is indicated by 18 in Figure 1a. In its inside 17b, the unit is provided with carbon fiber reinforcement 17d in accordance with what is described below. By pressing the plunger 2 in the direction of the arrow 6', i.e. to the left in the figure, the mixed-together matrix material 3 + 13 can be injected into the inside 17b of the unit in the direction of the arrow 18. In connection with the injection, any air 19, 19' enclosed inside the shell 17c of the unit can pass out through air removal holes 20, 21 at the end 17e of the unit, which is the opposite end in relation to the end 17f at which injection of the mixed-together matrix material takes place. The sealing function between the front parts 1'' of the syringe 1 and the opening 17a in the unit 17 is here assumed to be such as to prevent at least any substantial leakage of matrix material to the outside 22 of the unit 17, i.e. to the surrounding atmosphere. When the plunger 2 is acted upon according to Figure 1a, there does not need to be any relative displacement of the part 5a, as the latter can be freely controlled by the present injection procedure.

Figure 1b shows the connection of the front parts of the first and second syringes 1'' and 1''', respectively, to a nozzle 23 (cf. 16 in Figure 1) which can be engaged on the syringes (or vice versa) so that the inner spaces 1a' and 14, respectively, of the syringes are connected to one another. The nozzle is designed to guarantee said substantial leaktightness upon internal transfer of material/substance in the syringes. The syringe 1 is provided with an internal thread or bayonet socket 1a'''', by means of which the syringe can be screwed onto the nozzle 23 (or vice versa) by means of a flange 23a on the latter. The syringe also has a guide pin 1''''' by means of which the syringe is guided relative to the nozzle. The nozzle consists in principle of two parts 23b and 23c sealed off and secured by means (adhesive) 23d. The part 23b has an inner channel 23e for transporting substance between the inner spaces of the syringes. The front parts of the second syringe are also provided with a bayonet socket or internal thread 1'''''', in which the second syringe can be screwed via a flange 23f on the nozzle. Before being secured or screwed onto the nozzle, the syringes are provided with plug-shaped parts which enclose the syringes' substances before use. The plug-shaped parts are removable.

Figure 1c shows a practical illustrative embodiment of the nozzle structure and the connection of the first and second syringes 1 and 1', respectively, to the nozzle 23. Here, the first syringe 1 is connected to the nozzle part 23b, and the second syringe 1' is connected to the second part 23c of the nozzle. The front parts 1'' and 1''' of the syringes are, in accordance with the above, provided with internal threads via which the syringes can be screwed into the syringe-coupling nozzle 23 (cf, also 16 in Figure 1).

Figures 1d and 1e show in a corresponding manner the connection of the first syringe 1 to the unit 17 (cf. also Figure 1a). In this case, a connecting member 17g is used which is arranged at the front parts 17a of the unit 17. The connecting member comprises an outer clamping sleeve 17g' and a sleeve-shaped part 17g'' which at its outer end is provided with a flange 17g'''. The sleeves clamp the shell (tube) of the unit 17 between them. The first syringe 1 can be screwed onto said flange 17g''' with the aid of its internal thread 1''''. The guide part or guide tube 1a''''' of the syringe is guided in the inner wall 17g'''' of the part 17g''. An internal channel is established in this way and media can be transferred in accordance with the above from the inside of the syringe to the inner space 17b of the unit 17. The inner sleeve 17g'' can be arranged with a symbolically indicated plug or wall part 17g''''' which during use, i.e. during injection of the substance in the syringe 1 into the unit, prevents contact between the syringe and the space in the unit. The.plug-shaped or wall-shaped part can in this case be punctured in a manner known per se. Such a wall part can be used in cases where the unit encloses liquid medium before the substance in the syringe is to be introduced.

As regards the unit 17, in one illustrative embodiment it consists of a latex tube which can be blue in color and can be shaped as a dental arch or part of a dental arch or a dental arch template. One end 17e is closed off except for said small hole for removing air in conjunction with wetting of the carbon fiber. According to Figure 1b, at the other end 17f of the unit there is an opening, e.g. in an attached nozzle 23 (see Figure 1b) for application to the syringe with the matrix material. The wall of the latex tube can be, for example, 0.3 mm thick, and in connection with its use in the dental field must be pierced with one or more perforating tips. The latex tube holds the carbon fiber and matrix in place, so that the matrix for example does not run out. With the aid of silicone castings which are mounted on the outside of the latex tube or of the finished plastic model or of the template, a desired shape can be obtained in accordance with a given dental arch shape. In addition, with the aid of silicone castings, it is possible to mount mechanical retainers or brackets for individual teeth in the carbon fiber-reinforced dental bridge when the latex tube is used for this purpose. The carbon fiber can consist, for example, of five sections of hoses, which each consist of 48 rovings, braided with each other in the form of a tube. Each roving consists of ca. 6000 fibers. The hoses are fitted into each other. In this way a total of 240 rovings are formed, with ca. 6000 fibers in each, i.e. a total of ca. 1,440,000 fibers. The fibers are treated in the production process in such a way that the matrix is optimally secured to the fiber. This can be done in a manner known per se.

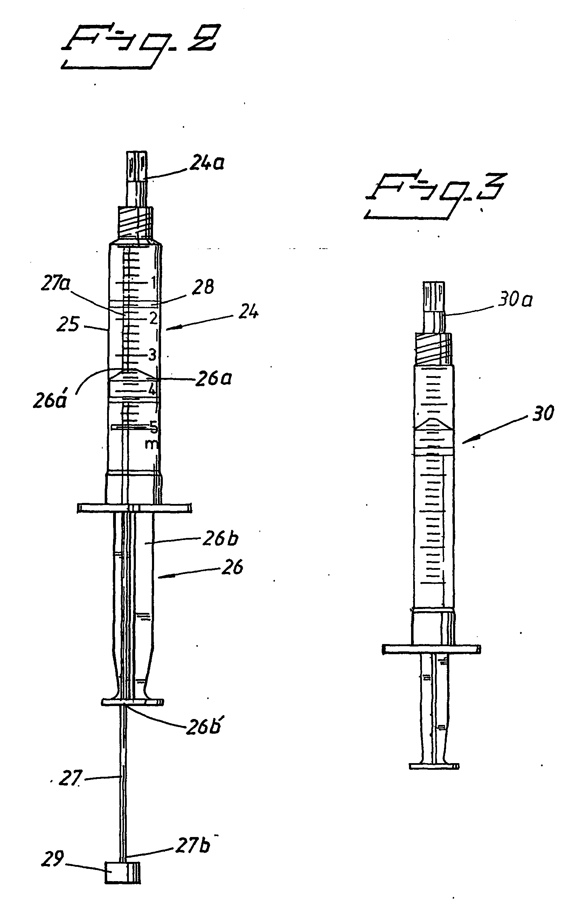

According to Figure 2, the first injection syringe is a syringe having the same basic configuration as the syringe which is commercially available on the open market under the name Becton Dickinson EDC B9140 Temse, BD 5 ml Syringe Luer-LOK™, which is adapted according to the invention in order to mix epoxy base and hardening agent in a closed system. The adaptation can involve the plunger of the injection syringe being removed from the syringe casing and the rubber washer (plunger) being disassembled. A 2-mm hole is drilled near the center of the plunger along its length, so that the result is a hole through the rubber washer and at the end of the plunger. The rubber washer (plunger) is provided with a hole using, for example, a ca. 1-mm cannula to obtain a round hole. In Figure 2, the injection syringe is indicated by 24, and the barrel part by 25, and the plunger part by 26b. The plunger part has a rubber part 26a arranged in the barrel 25, and an outer actuating part 26b. In Figure 2, the hole in the plunger part 26a is indicated by 26a' and the hole on the actuating part 26b is indicated by 26b'. In addition, the plunger has front parts 26c and 26d which constitute bearing parts for the plunger and support parts for the rubber seal 26a, in which continuous holes 26c' and 26d' are arranged.

A metal wire or metal rod 27, e.g. of stainless steel or brass, and for example with a diameter of 2 mm, is mounted in said holes 26a', 26b', 26c' and 26d'. The inner end 27a of the wire or rod 27 is connected to a disk-shaped member 28 (cf. 5a above) inside the barrel-shaped part 25 of the syringe. The other end 27b of the rod 27 is connected to an actuating part 29 (cf. 5c above). Since the hole in the plunger part 26a is less than the diameter of the wire or rod 27, sealing is obtained between the plunger 26a and the wire or rod 27. The wire or rod 27 is arranged displaceably in said holes 26a' and 26b'. This means that the part 28 can be imparted said relative movements in relation to the syringe barrel and plunger part 26. In one embodiment, said part can have the form of a round washer which fits in the syringe's casing or barrel-shaped space. The washer 28 can in this case be cut in from one side and in this way form a three-quarter moon so that the plastic (the matrix material) can easily flow past into the syringe or into its inner space (cf. the arrows 8 and 9 in Figure 1). The cut-in part can have the form of a sector or a segment. A hole of suitable diameter is also formed in the washer, in the same area as the rubber plunger so that the washer can be mounted on-the wire or rod immediately after its tip. The metal wire or metal rod 27 is pushed through the rubber plunger, the tip of the syringe plunger along the center of the plunger and out through the rear side of the syringe plunger. In one embodiment, the handle part 29 is designed as a round or cylindrical plastic piece, e.g. of acrylic with a length of ca. 5 mm. An expediently blind hole is formed in the center of the plastic piece.

When the plunger has been modified in this way, it is inserted back into the syringe casing or barrel volume and is placed at the rear areas of the syringe so that the actuating forces can be imparted to the metal wire or metal rod to permit backward and forward movements of the washer 28 in the syringe.

The modified injection syringe according to Figure 2 is charged with 3 mm of Araldite LY 5138 which is a construction adhesive intended to be mixed with 0.8 ml of hardening agent HY 5138. When the injection syringe according to Figure 2 has been charged, the syringe is closed using a modified cannula nozzle which is screwed onto the top of the syringe formed by a LUER-LOK™. The part which can be screwed on and off is indicated by 24a and has a flange-shaped part which can cooperate with an internal thread in accordance with the above.

The injection syringe 30 according to Figure 3 consists of a conventional injection syringe for 3 ml. In the present illustrative embodiment, this syringe does not need to be adapted and instead can be charged with 0.8 ml of hardening agent HY 5138 and then closed off using a modified cannula nozzle which is screwed onto the top of the syringe which is a LUER-LOK™. The closure part which can be screwed on and off is indicated by 30a and, like the part 28a on the syringe 28, prevents substance or material from leaking out before the particular syringe is used.

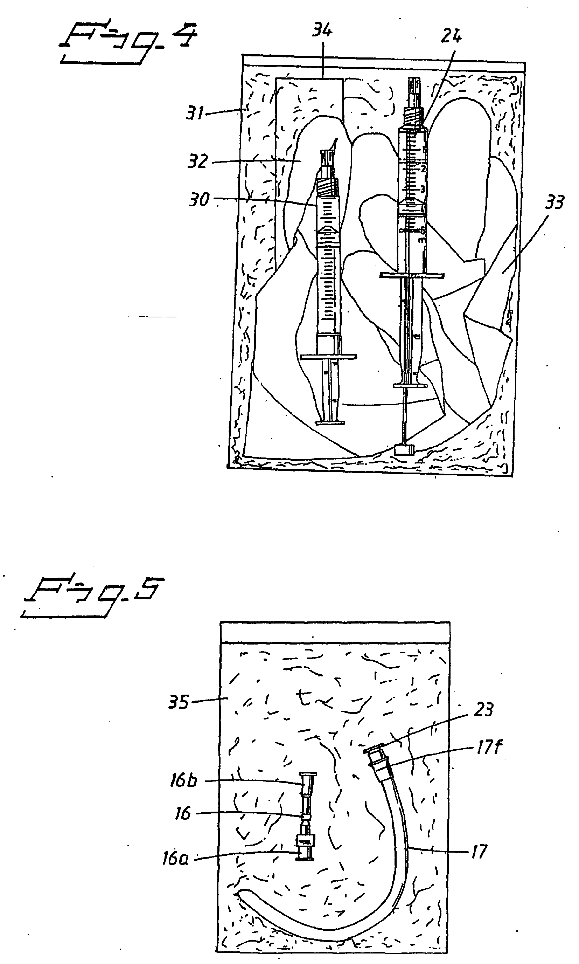

Figure 4 shows a packaging 31 of two syringes 24 and 30 (cf. above). The syringes are charged with matrix material components in accordance with the above. The packaging 31 has a bag shape and is made for example of plastic which securely protects the syringes with their associated matrix material components. Together with the syringes, the packaging also contains protective gloves 32, a mouth protector 33 and, if appropriate, instructions 34 for handling and managing the system.

Figure 5 shows a second packaging 35 in the form of a plastic bag which securely encloses the parts included in the package. In this case, the unit 17 is applied in the package. The aforementioned nozzle 17g is applied on the unit 17, at the end 17f of said unit. The package also contains the syringe-coupling nozzle 23 which comprises two cannula nozzles 23b and 23c with LUER-LOK™ sockets, for example a bayonet socket. With the aid of the syringe-coupling nozzle, said two injection syringes can be coupled together in accordance with the above in order to permit transfer of the plastic, hardening agent and base from one syringe into the other, and vice versa, in a closed system. The abovementioned protective gloves can be made of latex, large in size, for example laboratory gloves from the Swedish LABFAB or equivalent, and they must be used when working on unhardened plastic. Said mouth protector is used to cover the nose and mouth and must be used to reduce inhalation of vapors and particles when working with the plastic.

The abovementioned equipment is used as follows. The closures 28a, 30a for the injection syringes are loosened and the syringes are coupled together with the aid of the syringe-coupling nozzle in accordance with the above. The content of the syringe with hardening agent HY 5138 is injected across to the syringe with the Araldite LY 5138 and mixed with the aid of the mixing arrangement or mixing member which is mounted in the injection syringe according to Figure 2. The mixing arrangement or the mixing member is driven ca. five times out and in relative to the other parts of the syringe, the result of which is that the base and the hardening agent are mixed efficiently. Thereafter, some of the mixed plastic is injected back to the syringe according to Figure 3 and back again to the syringe according to Figure 2, for the purpose of taking up any residues of unmixed hardening agent in the syringe according to Figure 3. Thereafter, the mixing member can be acted upon, for example with ten complete strokes, out of and into the syringe for final mixing-together of base and hardening agent. Thereafter, the syringe according to Figure 2 is loosened from the syringe-coupling nozzle and is connected to the carbon fiber arrangement. In connection with the injection of the matrix in the syringe into the unit, the injection can be delayed several minutes so that the air bubbles have time to escape from the mixed matrix or plastic. Thereafter, wetting of the carbon fibers can be initiated by means of the matrix being slowly pressed into the latex tube. During wetting of the carbon fibre arrangement in the latex tube, said carbon fiber arrangement can remain in the plastic package while at the same time the free end of the latex tube is directed upward in order to facilitate the abovementioned evacuation of air. When media reach the end 17e of the latex tube, some of the matrix can run out in order to ensure that all the air inside the unit is evacuated. By keeping the latex tube in the plastic bag, the plastic formation remains in the bag where it polymerizes and constitutes little risk to the environment. The total working time for the mixed matrix at room temperature is at least 20 minutes. Thereafter, production of the carbon fiber-reinforced bridge can proceed.

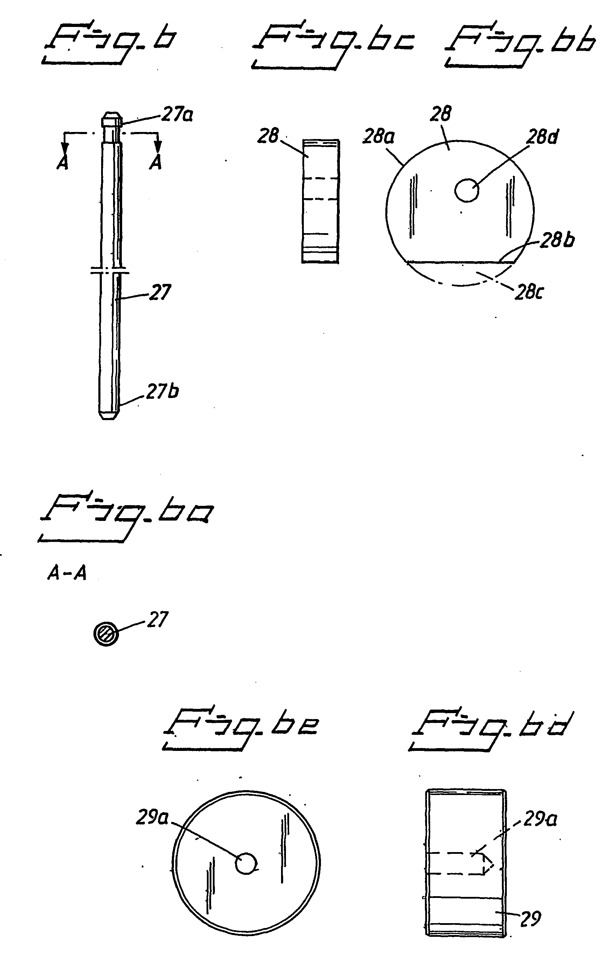

Figures 6a to 6e show the structure of the mixing member. The extent of the part 27 of the mixing member with associated end formations 27a and 27b is shown. The part 28 is designed with an arc shape 28a which merges into a segment-shaped part 28b. The removed segment is symbolized by 28c in Figure 6b and thus constitutes the passage via which the matrix passes between the spaces 1a' and 1a'' in Figure 1 between the upper and lower sides of the part 5a (i.e. part 28). The eccentric hole 28d constitutes the abovementioned hole for securing the rod end 27a, the rod-end diameter and the hole 28d being designed for mutual press-fit. In Figures 6e and 6d, the blind recess is indicated by 29a. The rod-end diameter 27b and the hole diameter in the recess 29a are designed for a press-fit so that there is fixing between the rod and the part 29 similar to the fixing between the rod end 27a and the hole 28d.

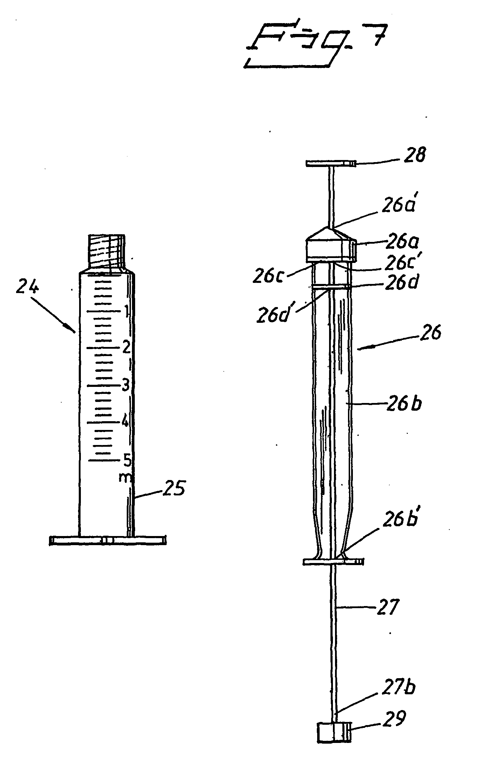

Figure 7 shows the first syringe according to Figure 2 in the separated state. The design of the plunger part 26 can be seen here. In the present illustrative embodiment, a rubber ring or rubber seal 26a is included, and two support flanges which are indicated by 26c' and 26d'. Said flanges serve as bearing flanges in the barrel 25, the front support flange 26c' also constituting a support for the rubber seal or the rubber ring 26a. A continuous hole for the rod or wire 27 is indicated by 26a' (in the rubber ring), 26b' (in the rear flange of the plunger), 26c' and 26d' in said flanges 26c and 26d. The figure also shows the actuating part 29 and the part 28 described in connection with Figures 6.

The invention is not limited to the embodiment described above by way of example, and instead it can be modified within the scope of the attached patent claims and the inventive concept.

## Claims

1. A method for reinforcing a unit for dental purposes, comprising
keeping components (3, 13) included in a matrix material and initially being viscous separated in two enclosed spaces (1a', 1a''; 14),
connecting the two enclosed spaces to a connecting member (16) and thereby bringing the enclosed spaces into internal contact with each other in a closed system via the connecting member (16),
displacing backward and forward, upon or after said bringing into internal contact, a displaceable mixing member (5), which is situated inside at least a first enclosed space of said two spaces, and which comprises a first part situated in said first enclosed space and a second part connected to the first part, and acting upon the second part from the outside of said first enclosed space to import relative movement of the first part, relative at least the first space for mixing the viscous matrix components together, feeding the mixed matrix components to the inside of the unit via an opening in the unit without any substantial lockage to the outside of the unit.

2. The method as claimed in patent claim 1, wherein the connecting comprises connecting the enclosed spaces (1a', 1a'', 14) arranged in two injection syringes (24, 30) where an epoxy base is applied in a first enclosed space of the enclosed spaces formed by a barrel space of a first injection syringe, and a hardening agent is applied in a second enclosed space of the enclosed spaces formed by a barrel space of a second injection syringe (30).

3. The method as claimed in patent claim 2, wherein the displacing comprises displacing the mixing member (5), which is arranged with the first part (5a) in the barrel space of the first injection syringe, and the second part (5b) which is connected to the first part and which is made to extend through a plunger (26a) of the first injection syringe.

4. The.method as claimed in patent claims 2 or 3, wherein the syringes comprises pointed areas, and said connecting comprises applying the syringes to respective ends of the connecting member (16) via pointed areas of the syringes.

5. The method as claimed in any of patent claims 2 to 4, comprising causing, upon acting upon the second part (5b) of the mixing member, the first part to execute longitudinal displacement movements relative to the barrel space of the first injection syringe, and, upon said movements, causing a first quantity of matrix material to pass through one or more continuous passages (28c) in the first part (28).

6. The method as claimed in any of patent claims 2 to 5, comprising, upon connection of the injection syringes via the connecting member (16), pressing a second quantity of matrix material from the second injection syringe (30) into the barrel space of the first injection syringe, and thereafter carrying out the mixing together in the last mentioned barrel space by means of displacement movements of the first part (5a) of the mixing member (5) relative to a barrel wall in the barrel space of the first injection syringe.

7. The method as claimed in any of patent claims 2 to 6, comprising carrying out the mixing together by a number of full strokes, e.g. ten full strokes, of the first part (5a) of the mixing member relative to the barrel of the first injection syringe.

8. The method as claimed in claim 7, comprising, in connection with the mixing-together in the barrel space of the first injection syringe, temporarily transferring the matrix material components, which have been completely or partially mixed together, completely or partially to the barrel space of the second injection syringe in order to ensure that the mixing-together involves any residues of a second matrix material component in the barrel space of the second injection syringe, after which renewed full strokes are executed in the first injection syringe.

9. A device for applying viscous matrix material into a unit for dental purposes, comprising two initially separate enclosed spaces for two initially viscous matrix material components (3,13), wherein at least one of the enclosed spaces has included in it a displaceable mixing member (5), which is backwardly and forwardly displaceable relative to at least one of the enclosed spaces as a function of an action exerted on it, and a connecting member (16) arranged to internally connect said enclosed spaces in a closed system, wherein the displaceable mixing member (5) comprises a first part (5a), which is situated in said at least one enclosed space, and a second part (5b), which is connected to the first part and accessible from the outside of said at least one enclosed space, is, and wherein the mixing member (5) is arranged to bring about mixing of the matrix material components upon or after coupling together of the enclosed spaces, and further comprising a unit with a shell provided with an opening.

10. The device as claimed in patent claim 9, wherein a first enclosed space of said two enclosed spaces is an internal space of a first injection syringe, the first enclosed space containing a first quantity of matrix material, e.g. in the form of an epoxy base.

11. The device as claimed in patent claim 10,
**characterized in that** a second enclosed space of said two enclosed spaces is an internal space of a second injection syringe (30), the second enclosed space containing a second quantity of matrix material, e.g. a hardening agent.

12. The device as claimed in patent claim 10, wherein the first injection syringe is provided with barrel and plunger parts and with the mixing member (5), wherein the mixing member is displaceably arranged relative to the plunger and the barrel parts.

13. The device as claimed in patent claim 12, wherein the first part (5a) of the mixing member (5), is situated in the barrel of the first injection syringe and is arranged to cooperate with the first quantity of matrix component, and the second part (5b) extends through the plunger part of the first injection syringe.

14. The device as claimed in patent claim 12 or 13, wherein the first part (5a) is arranged with one or more continuous passages, via which passage or passages the first quantity of matrix material passes completely or partially upon said actuation of the second part (5b).

15. The device as claimed in patent claim 14, wherein the first part (5a) of the mixing member forms a disk shaped element from which a sector-shaped or segment-shaped part is removed to form the continuous passage.

16. The device as claimed in any of patent claims 13 15, wherein a first end of the second part (5b) of the mixing member is secured to the first part of the mixing member via a blind recess in the latter.

17. The device as claimed in any of patent claims 13 to 16, wherein a handle part (5c) is secured to the second part (5b) of the mixing member, via a second end thereof, which handle part (5c) is provided with a blind recess in which said second part extends.

18. The device according to claim 9, wherein the first part (5a) of the mixing member (5) comprises disk-shaped member (28) having one or more continuous passages (28c), and the second part comprises a rod (27).

## Patentansprüche

1. Verfahren zum Verstärken einer Dentaleinheit mit
getrennt Halten von Komponenten (3, 13), die in einem Matrixmaterial enthalten sind und anfänglich viskos sind, in zwei geschlossenen Räumen (1a', 1a" 14),
Verbinden der zwei geschlossenen Räume mit einem Verbindungselement (16) und **dadurch** in inneren Kontaktbringen der geschlossenen Räume miteinander in einem geschlossenen System über das Verbindungselement (16),
bei oder nach dem in inneren Kontaktbringen vorwärts und rückwärts Verschieben eines verschiebbaren Mischelementes (5), das im Inneren in wenigstens einem geschlossenen Raum der zwei Räume liegt und das einen in dem ersten geschlossenen Raum liegenden ersten Teil und einen mit dem ersten Teil verbundenen zweiten Teil aufweist, und Einwirken auf den zweiten Teil von außerhalb des ersten geschlossenen Raumes, um eine Relativbewegung des ersten Teils relativ zu dem wenigstens ersten Raum zu vermitteln, um die viskosen Matrixkomponenten miteinander zu vermischen, die gemischten Matrixkomponenten in das Innere der Einheit über eine Öffnung in der Einheit zu leiten, ohne das irgendeine substantielle Leckage aus der Einheit nach außen erfolgt.

2. Verfahren nach Anspruch 1, wobei das Verbinden ein Verbinden der geschlossen Räume (1a', 1a", 14) umfasst, die in zwei Injektionsspritzen (24, 30) angeordnet sind, wobei in einem ersten geschlossen Raum der geschlossenen Räume, der in einem Spritzgehäuseraum einer ersten Injektionsspritze ausgebildet ist, ein Epoxyd angeordnet ist, und in einem zweiten geschlossenen Raum der geschlossenen Räume, der durch einen Spritzgehäuseraum der zweiten Injektionsspritze (30) gebildet ist, ein Härtungsmittel angeordnet ist.

3. Verfahren nach Anspruch 2, wobei das Verschieben ein Verschieben des Mischelementes (5) aufweist, das mit dem ersten Teil (5a) in dem Spritzgehäuseraum der ersten Injektionsspritze angeordnet ist, und dessen zweiter Teil (5b) mit dem ersten Teil verbunden ist und so ausgebildet ist, das er sich durch einen Kolben (26a) der ersten Injektionsspritze erstreckt.

4. Verfahren nach Anspruch 2 oder 3, wobei die Spritzen zugespitzte Bereiche aufweisen und das Verbinden ein Anbringen der Spritzen an den jeweiligen Enden des Verbindungselementes (16) über die zugespitzten Bereiche der Spritzen aufweist.

5. Verfahren nach einem der Ansprüche 2 bis 4, wobei verursacht wird, dass bei Einwirken auf den zweiten Teil (5b) des Mischelementes verursacht wird, dass der erste Teil Längsverschiebebewegungen relativ zu dem Spritzgehäuseraum der ersten Injektionsspritze ausführt und durch diese Bewegungen verursacht wird, dass eine erste Menge Matrixmaterial durch einen oder mehrere fortlaufende Kanäle (28c) in dem ersten Teil (28) hindurchgeht.

6. Verfahren nach einem der Ansprüche 2 bis 5, wobei bei Verbinden der Injektionsspritzen über das Verbindungselement (16) eine zweite Menge Matrixmaterial von der zweiten Injektionsspritze (30) in den Spritzengehäuseraum der ersten Injektionsspritze gepresst wird und danach ein Vermischen in dem zuletzt genannten Spritzengehäuseraum mittels der Verschiebebewegungen des ersten Teils (5a) des Mischelementes relativ zu der Spritzgehäusewand in dem Spritzgehäuseraum der ersten Injektionsspritze durchgeführt wird.

7. Verfahren nach einem der Ansprüche 2 bis 6, wobei das Vermischen durch eine Anzahl von vollständigen Hüben, beispielsweise zehn vollständigen Hüben des ersten Teils (5a) des Mischelementes relativ zu dem Spritzgehäuse der ersten Injektionsspritze durchgeführt wird.

8. Verfahren nach Anspruch 7, wobei in Verbindung mit dem Vermischen in dem Spritzgehäuseraum der ersten Injektionsspritze temporär Matrixmaterialkomponenten, die vollständig oder teilweise miteinander vermischt sind, vollständig oder teilweise in den Spritzgehäuseraum der zweiten Injektionsspritze transferiert werden, um sicherzustellen, dass das Vermischen irgendwelche Reste einer zweiten Matrixmaterialkomponente in dem Spritzgehäuseraum der zweiten Injektionsspritze zur Folge hat, wonach erneute vollständige Hübe in der ersten Injektionsspritze ausgeführt werden.

9. Vorrichtung zum Aufbringen von viskosem Matrixmaterial in eine Einheit für Dentalzwecke, mit zwei anfänglich separaten, geschlossenen Räumen für zwei anfänglich viskose Matrixmaterialkomponenten (3, 13), wobei in wenigstens einem der geschlossenen Räume ein verschiebbares Mischelement (5) enthalten ist, das relativ zu wenigstens einem der geschlossenen Räume als Funktion einer auf dieses ausgeübten Aktion vor-und zurückverschiebbar ist, und ein Verbindungselement (16) angeordnet ist, um die geschlossenen Räume in einem geschlossenen System intern zu verbinden, wobei das verschiebbare Mischelement (5) einen ersten Teil (5a), der in dem wenigsten einen geschlossenen Raum liegt und einen zweiten Teil (5b) aufweist, der mit dem ersten Teil verbunden ist und von außerhalb des wenigsten einen geschlossenen Raums zugänglich ist, und wobei das Mischelement (5) so angeordnet ist, das es ein Vermischen der Matrixmaterialkomponenten bei oder nach dem Zusammenkoppeln der geschlossenen Räume hervorbringt, und weiterhin eine Einheit mit einer Hülse aufweist, die mit einer Öffnung versehen ist.

10. Vorrichtung nach Anspruch 9, wobei ein erster geschlossener Raum der zwei geschlossenen Räume ein Innenraum einer ersten Injektionsspritze ist, der erste geschlossene Raum eine erste Menge Matrixmaterial, beispielsweise in Form eines Epoxyds enthält.

11. Vorrichtung nach Anspruch 10, **dadurch gekennzeichnet, dass** ein zweiter geschlossener Raum der zwei geschlossenen Räume ein Innenraum einer zweiten Injektionsspritze (30) ist, wobei der zweite geschlossene Raum eine zweite Menge Matrixmaterial, beispielsweise ein Härtungsmittel, enthält.

12. Vorrichtung nach Anspruch 10, wobei die erste Injektionsspritze mit einem Spritzgehäuse und Kolbenteilen mit dem Mischelement (5) versehen ist, wobei das Mischelement relativ zu dem Kolben und den Spritzgehäuseteilen verschiebbar angeordnet ist.

13. Vorrichtung nach Anspruch 12, wobei der erste Teil (5a) des Mischelementes (5) in dem Spritzgehäuse der ersten Injektionsspritze liegt und so angeordnet ist, dass er mit der ersten Menge Matrixkomponente zusammenwirkt, und der zweite Teil (5b) sich durch den Kolbenteil der ersten Injektionsspritze erstreckt.

14. Vorrichtung nach Anspruch 12 oder 13, wobei der erste Teil (5a) mit einem oder mehreren fortlaufenden Kanälen versehen ist, durch welchen Kanal oder welche Kanäle die erste Menge Matrixmaterial vollständig oder teilweise bei Betätigen des zweiten Teils (5b) hindurchgeht.

15. Vorrichtung nach Anspruch 14, wobei der erste Teil (5a) des Mischelementes ein scheibenförmiges Element bildet, an welchem ein sektorförmiger oder segmentförmiger Teil entfernt ist, um den fortlaufenden Kanal zu bilden.

16. Vorrichtung nach einem der Ansprüche 13 bis 15, wobei das erste Ende des zweiten Teils (5b) des Mischelementes an dem ersten Teil des Mischelementes über eine versteckte Aussparung in dem zuletzt genannten befestigt ist.

17. Vorrichtung nach einem der Ansprüche 13 bis 16, wobei an dem zweiten Teil (5b) des Mischelementes über ein zweites Ende desselben ein Handhabungsteil (5c) befestigt ist, wobei dieser Handhabungsteil (5c) mit einer verdeckten Aussparung versehen ist, in welche sich der zweite Teil erstreckt.

18. Vorrichtung nach Anspruch 9, wobei der erste Teil (5a) des Mischelementes (5) ein scheibenförmiges Element (28) aufweist, das einen oder mehrere fortlaufende Kanäle (28c) hat, und der zweite Teil eine Stange (27) aufweist.

## Revendications

1. Procédé destiné à renforcer une unité à des fins dentaires, comprenant :
le maintien de composants (3, 13) inclus dans un matériau matriciel et qui sont initialement visqueux, séparés dans deux espaces clos (1a', 1a'', 14),
le raccordement des deux espaces clos à un élément de raccordement (16) et ainsi l'amenée des espaces clos en contact interne l'un avec l'autre dans un système fermé par l'intermédiaire de l'élément de raccordement (16),
le déplacement vers l'arrière et vers l'avant, au moment de, ou après l'amenée en contact interne, d'un élément mélangeur déplaçable (5), qui est situé à l'intérieur d'au moins un premier espace clos desdits deux espaces, et qui comprend une première partie située dans ledit premier espace clos et une seconde partie raccordée à la première partie, et une action sur la seconde partie, depuis l'extérieur dudit premier espace clos pour transmettre un mouvement relatif de la première partie par rapport au au moins premier espace afin de mélanger ensemble les composants visqueux matriciels,
la fourniture des composants matriciels mélangés à l'intérieur de l'unité à travers une ouverture prévue dans l'unité sans aucune fuite substantielle vers l'extérieur de l'unité.

2. Procédé selon la revendication de brevet 1, dans lequel le raccordement comprend le raccordement des espaces clos (1a', 1a'', 14) agencés dans les deux seringues d'injection (24, 30) où une base d'époxy est appliquée dans un premier espace clos des espaces clos formés par un espace de cylindre d'une première seringue d'injection, et un agent durcissant est appliqué dans un second espace clos des espaces clos formés par un espace de cylindre d'une seconde seringue d'injection (30).

3. Procédé selon la revendication 2, dans lequel le déplacement comprend le déplacement de l'élément mélangeur (5), qui est agencé avec la première partie (5a) dans l'espace de cylindre de la première seringue d'injection, et la seconde partie (5b) qui est raccordée à la première partie et qui est conçue pour s'étendre à travers un piston (26a) de la première seringue d'injection.

4. Procédé selon les revendications de brevet 2 ou 3, dans lequel les seringues comprennent des zones pointues et ledit raccordement comprend l'application desdites seringues sur les extrémités respectives de l'élément de raccordement (16) par l'intermédiaire des zones pointues des seringues.

5. Procédé selon l'une quelconque des revendications de brevet 2 à 4, dans lequel au moment où on agit sur la seconde partie (5b) de l'élément mélangeur, la première partie exécute des mouvements de déplacement longitudinal par rapport à l'espace de cylindre de la première seringue d'injection, et, au moment desdits mouvements, une première quantité du matériau matriciel traverse un ou plusieurs passage(s) continu(s) (28c) dans la première partie (28).

6. Procédé selon l'une quelconque des revendications de brevet 2 à 5, comprenant, au moment du raccordement des seringues d'injection par l'intermédiaire de l'élément de raccordement (16), la poussée d'une seconde quantité de matériau matriciel depuis la seconde seringue d'injection (30) dans l'espace du cylindre de la première seringue d'injection, puis l'exécution du mélange dans l'espace de cylindre mentionné en dernier, au moyen de mouvements de déplacement de la première partie (5a) de l'élément mélangeur (5) par rapport à une paroi dé cylindre dans l'espace de cylindre de la première seringue d'injection.

7. Procédé selon l'une quelconque des revendications de brevet 2 à 6, comprenant l'exécution du mélange grâce à un certain nombre de courses complètes par exemple, dix courses complètes, de la première partie (5a) de l'élément mélangeur par rapport au cylindre de la première seringue d'injection.

8. Procédé selon la revendication 7, comprenant, en liaison avec le mélange, dans l'espace du cylindre de la première seringue d'injection, le transfert temporaire des composants du matériau matriciel, qui ont été totalement ou en partie mélangés ensemble, en totalité ou en partie vers l'espace du cylindre de la seconde seringue d'injection afin de garantir que le mélange implique tous les résidus d'un second composant de matériau matriciel dans l'espace de cylindre de la seconde seringue d'injection, après quoi de nouvelles courses totales sont exécutées dans la première seringue d'injection.

9. Appareil destiné à appliquer un matériau matriciel visqueux dans une unité à des fins dentaires, comprenant deux espaces clos initialement séparés pour deux composants de matériau matriciel initialement visqueux (3, 13), dans lequel au moins l'un des espaces clos présente, inclus dans celui-ci, un élément mélangeur déplaçable (5) qui peut être déplacé vers l'avant et vers l'arrière par rapport à au moins l'un des espaces clos en fonction d'une action exercée sur celui-ci, et un élément de raccordement (16) agencé pour raccorder intérieurement lesdits espaces clos dans un système fermé, dans lequel l'élément mélangeur déplaçable (5) comprend une première partie (5a), qui est située dans ledit au moins un espace clos, et une seconde partie (5b) qui est raccordée à la première partie et qui est accessible depuis l'extérieur dudit au moins un espace clos, et dans lequel l'élément mélangeur (5) est agencé pour amener les composants du matériau matriciel à se mélanger au moment du couplage des espaces clos, ou après celui-ci, et comprenant en outre une unité munie d'une coque équipée d'une ouverture.

10. Appareil selon la revendication de brevet 9, dans lequel un premier espace clos des dits deux espaces fermés est un espace interne d'une première seringue d'injection, le premier espace clos contenant une première quantité de matériau matriciel, par exemple sous la forme d'une base époxy.

11. Appareil selon la revendication de brevet 10, **caractérisé en ce qu'**un second espace clos desdits deux espaces clos est un espace interne d'une seconde seringue d'injection (30), le second espace clos contenant une seconde quantité de matériau matriciel, par exemple un agent durcissant.

12. Appareil selon la revendication de brevet 10, dans lequel la première seringue d'injection est munie des pièces de cylindre et de piston et de l'élément mélangeur (5), dans lequel l'élément mélangeur est agencé, pour pouvoir se déplacer, par rapport aux pièces de piston et cylindre.

13. Appareil selon la revendication de brevet 12, dans lequel la première partie (5a) de l'élément mélangeur (5) est située dans le cylindre de la première seringue d'injection et est agencée pour coopérer avec la première quantité du composant matriciel, et la seconde partie (5b) s'étend à travers la partie de piston de la première seringue d'injection.

14. Appareil selon les revendications de brevet 12 ou 13, dans lequel la première partie (5a) est agencée avec un ou plusieurs passage(s) continu(s), par l'intermédiaire duquel ou desquels passage(s) la première quantité de matériau matriciel passe totalement ou en partie au moment dudit actionnement de la seconde partie (5b).

15. Appareil selon la revendication de brevet 14, dans lequel la première partie (5a) de l'élément mélangeur forme un élément en forme de disque duquel une partie en forme de secteur ou en forme de segment est retirée pour former le passage continu.

16. Appareil selon l'une quelconque des revendications de brevet 13 à 15, dans lequel une première extrémité de la seconde partie (5b) de l'élément mélangeur est fixée sur la première partie de l'élément mélangeur par l'intermédiaire d'un évidement aveugle prévu dans ce dernier.

17. Appareil selon l'une quelconque des revendications de brevet 13 à 16, dans lequel une partie de poignée (5c) est fixée sur la seconde partie (5b) de l'élément mélangeur, par l'intermédiaire d'une seconde extrémité de celui-ci, laquelle partie de poignée (5c) est munie d'une évidement aveugle dans lequel s'étend ladite seconde partie.

18. Appareil selon la revendication 9, dans lequel la première partie (5a) de l'élément mélangeur (5) comprend un élément en forme de disque (28) ayant un ou plusieurs passage(s) continu(s) (28c), et la seconde partie comprend une tige (27).
